Europäisches Patentamt

European Patent Office

Office européen des brevets

(19)

(11) EP 0 704 483 B1

(12) **EUROPEAN PATENT SPECIFICATION**

(45) Date of publication and mention
of the grant of the patent:
**12.08.1998 Bulletin 1998/33**

(51) Int Cl.6: **C08L 23/10**, C08K 3/36,
C08J 5/18

(21) Application number: **95306430.0**

(22) Date of filing: **13.09.1995**

(54) **Method for producing a polyolefin composition and method for producing a polyolefin film**

Verfahren zur Herstellung einer Polyolefinzusammensetzung und Verfahren zur Herstellung eines Polyolefinfilms

Procédé de préparation d'une composition de polyoléfine et procédé pour la fabrication d'un film à base de polyoléfine

(84) Designated Contracting States:
**DE FR GB IT**

(30) Priority: **13.09.1994 JP 219119/94**

(43) Date of publication of application:
**03.04.1996 Bulletin 1996/14**

(73) Proprietor: **SUMITOMO CHEMICAL COMPANY LIMITED**
**Osaka-shi, Osaka 541 (JP)**

(72) Inventors:
• **Ima, Seiichiro**
**Chiba (JP)**
• **Shiratani, Eisuke**
**Chiba (JP)**

(74) Representative: **Ablewhite, Alan James**
**MARKS & CLERK,**
**57/60 Lincoln's Inn Fields**
**London WC2A 3LS (GB)**

(56) References cited:
• DATABASE WPI Section Ch, Week 8207 Derwent Publications Ltd., London, GB; Class A17, AN 82-12856E & JP-A-57 003 840 (TOKUYAMA SODA) , 9 January 1982
• DATABASE WPI Section Ch, Week 7915 Derwent Publications Ltd., London, GB; Class A17, AN 79-28662B & JP-A-54 029 352 (TORAY INDUSTRIES) , 5 March 1979
• DATABASE WPI Section Ch, Week 9314 Derwent Publications Ltd., London, GB; Class A17, AN 93-112854 & JP-A-05 051 495 (IDEMITSU PETROCHEMICAL) , 2 March 1993

**Description**

The present invention relates to a method for producing a polyolefin composition and to a method for producing a polyolefin film. More particularly, the present invention relates to a method for producing a polyolefin composition which is comprised of polyolefin particles having an average particle diameter of from 500 to 1300 µm and having not more than 10% by weight of fine particles with a diameter of 300 µm or less. The present invention also relates to a method for producing a polyolefin film from the polyolefin composition. The resultant polyolefin film has an excellent appearance, transparency, blocking resistance and scratch resistance and, as such, is especially useful as a food packaging film or wrap.

Films made from polyolefin have a wide variety of uses, such as, packaging materials for various kind of articles including foods. More specifically, films made from polypropylene have been widely used for food packaging because of their excellent mechanical properties, optical properties, such as gloss, transparency and the like, and food sanitation properties, such as vapor barrier, and odorlessness.

However, films made from polyolefin have a distinct disadvantage in that one polyolefin film tends to stick to another film when the films are piled one on top of the other. This undesirable property of polyolefin films is referred to as blocking and decreases the effectiveness, for example, in packaging.

Two main methods have developed to prevent blocking in polyolefin films. In one method, an antiblocking agent, such as an inorganic fine powder (e.g., silica) or an organic fine particles (e.g., cross-linked polymer), is mixed with the polyolefin particles used to prepare the polyolefin film. In the other method, an antiblocking agent in combination with a lubricant, such as a fatty acid amide, is mixed with the polyolefin particles used to prepare the polyolefin film.

It is well known that polyolefins can be obtained by polymerization of olefins in the presence of a catalyst represented by a titanium trichloride-organoaluminum compound. However, the catalytic activity of such catalysts for polymerization is very low. The polyolefin particles obtained by such polymerization have a comparatively wide distribution of particles sizes and usually contain more than 20% by weight of fine particles having a diameter of not more than 300 µm. The average particle size is usually less than 500 µm. In addition, the dispersibility of antiblocking agents in such polyolefin particles is good.

Several improved catalysts having higher catalytic activity for the polymerization of olefins have been developed. Polyolefin particles obtained by using the improved catalysts usually contain less than 10% by weight of fine particles having particle diameters not more than 300 µm. In addition, such polyolefin particles have a narrow distribution of particle sizes and the average particle size is more than 500 µm.

Polyolefin particles obtained by using the improved catalyst have the advantages of ease of preparation and decreased danger of dust explosion. However, the dispersibility of antiblocking agents into such polyolefin particles is so poor that any polyolefin composition made from such particles will have the antiblocking agents unhomogeneously dispersed throughout. Any polyolefin film produced from such a polyolefin composition will have a poor or inferior appearance.

Methods to improve the dispersion of antiblocking agents in polyolefin particles are described in JP-A-57-3840 and JP-A-58-225142.

In JP-A-57-3840, a method is disclosed in which polyolefin particles are mixed with an antiblocking agent, i.e., silica powder (trade name "syloid 244" or "Aerosil 380" ). The mixture is subjected to a temperature between 50 °C and the melting temperature of the polyolefin. An organic amide is then added to the mixture as a lubricant. According to this method, the antiblocking agent and the lubricant must be separately mixed with the polyolefin particles. The disclosed mixing steps are complicated and undesirable for industrial processes.

In JP-A-58-225142, a method is disclosed for preparing a composition in which propylene polymer particles are mixed with an antiblocking agent, i.e., silica powder (trade name "syloid 244" or "Aerosil 200") and a magnesium and/ or aluminum salt of a specific fatty acid. However, the use of a metal salt of a specific fatty acid with the antiblocking agent makes the mixing step complicated and undesirable for industrial processes.

The object of the present invention is to provide a superior industrial process for producing a polyolefin composition comprising (I) polyolefin particles having a large average particle diameter and containing a small amount of fine particles obtained by using a high activity catalyst for polymerization and (II) an antiblocking agent, without the need for the complicated mixing step or steps used in the conventional methods. The resultant polyolefin composition would be used to produce a polyolefin film which has an excellent appearance, transparency, blocking resistance and scratch resistance.

The present invention relates to a process for producing a polyolefin composition, comprising the steps of:

a) mixing

i) 100 parts by weight of polyolefin particles (I) having an average particle diameter of from 500 to 1300 µm and containing not more than 10% by weight of fine particles having particle diameters of 300 pm or less and

ii) 0.05 to 0.6 parts by weight of an inorganic fine powder (II) having an average particle diameter of from 1 to 4 µm and an apparent specific gravity of 0.2 to 0.5 g/cm$^3$; and

b) melt-kneading the mixture to form the composition.

The present invention also relates to a process for producing polyolefin film, comprising the steps of:

a) mixing

i) 100 parts by weight of polyolefin particles (I) having an average particle diameter of from 500 to 1300 µm and containing not more than 10% by weight of fine particles having particle diameters of 300 µm or less and ii) 0.05 to 0.6 parts by weight of an inorganic fine powder (II) having an average particle diameter of from 1 to 4 µm and an apparent specific gravity of 0.2 to 0.5 g/cm$^3$;

b) melt-kneading the mixture to form a polyolefin composition; and
c) melt-extruding the polyolefin composition to form the polyolefin film.

## DETAILED DESCRIPTION OF THE INVENTION

The present invention will be explained in further detail in the following Preparation section and Examples.

Preparation of polyolefin composition

The process for producing a polyolefin composition comprises a step of mixing polyolefin particles (I) having a specific range of an average particle diameter and containing an amount of fine particles and a specified amount of an inorganic fine powder (II) having a specific range of an average particle diameter and an apparent specific gravity, and a step of melt-kneading the obtained mixture.

The polyolefin particles (I) used in the present invention are polyolefin particles, such as polypropylene and polyethylene, having an average particle diameter of from 500 to 1300 µm, preferably from 600 to 1200 µm. Furthermore, the polyolefin particles contain not more than 10% by weight of fine particles having an average particle diameter of 300 µm or less. When the average particle diameter of the polyolefin particles exceeds 1300 µm, the dispersion of the inorganic powder is insufficient to produce the desired polyolefin composition. The average particle diameter of the polyolefin particles is determined by measuring particle size distribution by laser diffraction.

As the polyolefin used in the present invention, polyolefins incorporating propylene as a monomer component are preferred, and a homopolymer of propylene and random copolymers of propyleneethylene, propylene-α-olefin and propylene-ethylene-α-olefin α-olefin, are particularly preferred. As the those having 4 to 10 carbon atoms are preferred and, among them, butene-1 is more preferred.

The inorganic fine powder (II) used in the present invention is one having an average particle diameter of from 1 to 4 µm and an apparent specific gravity of from 0.2 to 0.5 g/cm$^3$, preferably from 0.2 to 0.4 g/cm$^3$. When the average particle diameter of the inorganic fine powder is less than 1 µm, the blocking resistance of the film obtained from the polyolefin composition comprising the polyolefin particles and tne inorganic fine powder is insufficient. When the average particle diameter of the inorganic fine powder exceeds 4 µm, the appearance and transparency of the film obtained from the composition is decreased. When the apparent specific gravity of the inorganic fine powder is less than 0.2 g/cm$^3$, the appearance of the film obtained from the composition decreases and when it exceeds 0.5 g/cm$^3$, the scratch resistance of the film obtained from the composition deteriorates.

Examples of the inorganic fine powders are silica, magnesium silicate, aluminum silicate, calcium carbonate and magnesium oxide. Among them, silica is suitably used.

The amount of the inorganic fine powder. (II) used in the composition is between 0.05 to 0.6 parts by weight per 100 parts by weight of the polyolefin particles (I), more preferably 0.1 to 0.3 parts by weight to 100 parts by weight of the polyolefin particles (I). When the amount of the inorganic fine powder in the composition is less than 0.05 parts by weight, the blocking resistance of the film made from the composition is insufficient. When the amount of the inorganic fine powder in the composition exceeds 0.6 parts by weight, the dispersibility of the inorganic fine powder in the composition decreases and results in deterioration of the appearance and transparency of the resulting film.

The inorganic fine powder (II) preferred in the present invention is silica having an average particle diameter of from 1.5 to 4 µm and an apparent specific gravity of from 0.2 to 0.4 g/cm$^3$. Furthermore, it is preferred that the amount of the silica in the composition be between 0.1 to 0.3 parts by weight per 100 parts by weight of the polyolefin particles (I).

Conventional mixers, such as a tumbler mixer, super mixer, Henschel mixer, screw blender and ribbon blender, can be used for mixing the polyolefin particles (I) and the inorganic fine powder (II) in the method of the present invention.

Mixers equipped with rotors are preferred in the present method because of the higher dispersion efficiency of the inorganic fine powder (II) in the composition. When mixers equipped with rotors (for example, super mixer and Henschel mixer) are used in the present method, the peripheral speed of the edge of the rotors is preferably more than 5 m/sec in view of the dispersibility of the inorganic fine powder (II).

In the melt-kneading step, a temperature equal to or greater than the melting temperature of the polyolefin particles can be used. This temperature can be obtained, for example, by using a melt-extruder or Banbury mixer.

In addition to the polyolefin particles (I) and the inorganic fine powder (II), additives such as antioxidants, neutralizers, lubricants and antistatic agents can be mixed with the polyolefin composition of the present invention as the need arises. The amount of additives to be used is not critical. For example, the amount of lubricants to be used can vary from 0.5 to 0.05 parts by weight per 100 parts by weight of the polyolefin composition, preferably from 0.2 to 0.05 parts by weight and more preferably from 0.1 to 0.05 parts by weight.

The polyolefin composition obtained from the above-described process can be used for producing melt-extruded articles, especially for producing polyolefin films of about 10 to 100 pm in thickness.

In the method for producing polyolefin film, any conventional extrusion method (e.g., a T-die film-forming method or a tubular film-forming method) can be used. A T-die film-forming method wherein high-speed film formation can be accomplished by using a large scale film-forming machine is preferred.

The conditions for film formation depend on the kind of polyolefin and the extrusion method used. For example, when a T-die film-forming method is used, polypropylene film can be obtained by the following four step process. First, the polypropylene composition obtained by the above-disclosed method is melted between 180 and 300 °C. Second, the resultant molten composition is melt-extruded between 180 and 280 °C. Third, tne extruded molten composition is cooled witn cooling rolls between 10 and 70 °C. Finally, the cooled composition is subjected to winding in a film winder in order to obtain the polyolefin film. The thickness of the film can be controlled by adjusting the amount of the extruded molten composition and the winding speed.

According to the present invention, a polyolefin composition providing a film having an excellent balance of a transparency, blocking resistance and scratch resistance can be obtained by using polyolefin particles having a large average particle diameter and low content of fine particles without applying the conventional method in which the complicated mixing step is considered essential.

The following Examples will illustrate the present invention. However, it is to be understood that the present invention is not limited to these Examples.

The properties mentioned in the DETAILED DESCRIPTION OF THE INVENTION and the Examples were measured in the following manner.

(1) Melt flow rate (MFR)

Melt flow rate was determined according to the method described in JIS K7210, condition 14.

(2) The contents of ethylene and butene-1

Ethylene content was determined by the IR spectrum method described at page 256 in "(i) Random copolymer" of KOBUNSHI BUNSEKI Handbook (published by Asakura Shoten in 1985).

Butene-1 content was determined by the IR spectrum method from the following equation:

Butene-1 content (% by weight) = $1.208K'_{767}$ wherein $K'_{767}$ is absorbance at 767 cm$^{-1}$.

(3) Average particle diameter of the polyolefin particles

The average particle diameter of the polyolefin particles was determined based on the weight-cumulative particle size distribution of the powder. The weight-cumulative particle size distribution of the powder was measured with an apparatus (HELOS-E/LA; manufactured by Nihon Densi Company Ltd.) for measuring particle size distribution by laser diffraction and was expressed in terms of median diameter.

(4) Average particle diameter of the inorganic fine powder

The average particle diameter of the inorganic fine powder was determined based on the weight-cumulative particle size distribution of the powder measured with a Coulter counter/multi-sizer and was expressed in terms of median diameter.

(5) Apparent specific gravity of the inorganic fine powder

The apparent specific gravity of the inorganic fine powder was determined according to the testing method described in item 6.8 in JIS K6220.

Film properties.

(6) Appearance.

The number of fish eyes (FE) in the film having a diameter of 200 μm or more were visually counted. The appearance of the film was judged as "good" when the number of FE was about 10 or less per 1,000 cm² of the film and as "poor" or "bad" when it was 20 or more. When the number of FE was in the range of 10 to 20, the appearance was judged as "nearly good", if FE having a diameter of about 100 μm could be observed.

(7) Haze

Haze was determined according to the method described in JIS K7105.

(8) Blocking resistance

Blocking resistance was determined by the following method. Two films of 225 mm by 50 mm were placed one upon the other and an overlapped area of 100 mm by 50 mm of the films was conditioned under a load of 40 g/cm² at 60 °C for 3 hours. Thereafter, the conditioned overlapped films were allowed to stand in an atmosphere having 50% humidity at 23 °C for at least 30 minutes. Then the strength required for peeling the stored films was determined at a loading velocity of 20 g/min using a blocking tester manufactured by Shimazu Corp. The lower the value obtained by above measurement, the greater the blocking resistance.

(9) Scratch resistance

Scratch resistance was determined by the following method. Two films laid at 23 °C for 1 day after the preparation of the films were used. One of the films was set on a soft material to prevent scratching of the film and fixed on a shaker (film A). The other film was fixed on a metal pipe and pressed onto film A by a bar laminated with silicone rubber. The films were rubbed against each other for 1 minute under the conditions such that the swinging width was 40 mm and the swinging speed was 120 cycles/min. The haze values of film A before and after the rubbing were determined according to method described in JIS K7105. The difference between the two values was termed Δhaze and is used to evaluate the scratch resistance of the film.

$$\Delta haze = haze\ after\ the\ rubbing - haze\ before\ the\ rubbing$$

The lower the value obtained by the above measurement method, i.e., the lower the Δhaze, the greater the scratch resistance.

Example 1

In this Example, polypropylene particles (melt flow rate: 8.2 g/10 min) having an average particle diameter of 620 μm and containing 3% by weight of a fine powder of 300 μm or less in diameter were used as the polyolefin particles. 100 parts by weight of these polypropylene particles, 0.05 parts by weight of calcium stearate, 0.1 parts by weight of Sumilizer BHT (manufactured by Sumitomo Chemical Company Ltd.), 0.1 parts by weight of Irganox 1010 (manufactured by Ciba-Geigy Ltd.), 0.1 parts by weight of erucic amide, 0.15 parts by weight of Syloid 55 as the inorganic fine powder (manufactured by Fuji Devison Ltd., silica powder; average particle diameter of 2.7 μm and an apparent specific gravity of 0.33 g/cm³) were mixed with a 20 L super mixer. The peripheral speed of the edge of a rotor was 8 m/sec. The resulting mixture was melt-kneaded by a 40 mmφ T-die extruder at a die temperature of 250 °C and then cooled with a cooling roll of 30 °C at surface temperature to obtain a single layer film of 30 μm in thickness. The properties of the film are given in Table 3. The appearance, haze, blocking resistance and scratch resistance were excellent.

5

Example 2

The same procedure as described in Example 1 was repeated in Example 2, except that propyleneethylene-butene-1 copolymer particles (hereinafter abbreviated as PP-1; ethylene content of 2.1% by weight, butene-1 content of 5.5% by weight and melt flow rate of 4.8 g/10 min) having an average particle diameter of 700 μm and containing 2% by weight of a fine powder of 300 μm or less in diameter was used as the polyolefin particles. In addition, the amount of Syloid 55 used as the inorganic fine powder was 0.10 parts by weight. The properties of the film thus obtained are given in Table 3.

Example 3

The same procedure as described in Example 1 was repeated in Example 3, except that propylene-ethylene-butene-1 copolymer particles (ethylene content of 4.3% by weight, butene-1 content of 2.0% by weight and melt flow rate of 4.9 g/10 min) having an average particle diameter of 1170 μm and containing 6% by weight of a fine powder of 300 pm or less in diameter was used as the polyolefin particles. In addition, the amount of Syloid 55 used as the inorganic fine powder was 0.15 parts by weight. The properties of the film thus obtained are given in Table 3.

Comparative Example 1

The same procedure as described in Example 1 was repeated in Comparative Example 1, except that propylene-ethylene-butene-1 copolymer particles (ethylene content of 4.3% by weight, butene-1 content of 4.1% by weight and melt flow rate of 5.7 g/10 min) having an average particle diameter of 1510 pm and containing 3% by weight of a fine powder of 300 pm or less in diameter was used as the polyolefin particles. In addition, the amount of Syloid 55 used as the inorganic fine powder was 0.15 parts by weight. The properties of the film thus obtained are given in Table 3.

Examples 4 to 6

The same procedure as described in Example 1 was repeated in Examples 4 to 6, except that PP-1 was used as the polyolefin particles and types and amounts (parts by weight) of the inorganic fine powder were as indicated in Table 1. The properties of the films thus obtained are given in Table 4.

Table 1

| Example No. | inorganic fine powder | mixing amount |
|---|---|---|
| 4 | Syloid 57 (silica powder manufactured by Fuji Devison Ltd.) | 0.15 |
| 5 | Syloid 74 (silica powder manufactured by Fuji Devison Ltd.) | 0.15 |
| 6 | Syloid 55 (silica powder manufactured by Fuji Devison Ltd.) | 0.25 |

Example 7

The same procedure as described in Example 1 was repeated in Example 7, except that PP-1 used as the polyolefin particles and the mixing amount of the inorganic fine powder was 0.50 parts by weight. In addition, a 20 mmφ twin-screw extruder was used for melt-kneading. The properties of the film thus obtained are given in Table 4.

Reference Example 1

The same procedure as described in Example 1 was repeated in Reference Example 1, except that propylene-ethylene-butene-1 copolymer particles (ethylene content of 2.0 % by weight, butene-1 content of 5.7 % by weight and melt flow rate of 6.0 g/10 min) having an average particle diameter of 320 μm and containing 37 % by weight of a fine powder of 300 μm or less in diameter was used as the polyolefin particles. In addition, Syloid 244 (manufactured by Fuji Devison Ltd., silica powder; average particle diameter of 1.8 μm and an apparent specific gravity of 0.13 g/cm$^3$) was used as the inorganic fine powder at 0.15 parts by weight. The properties of the film thus obtained are given in Table 3.

In the present Reference Example, polymer particles were used which had an average particle diameter (320 μm) less than that employed in the present method (500 to 1300 μm) and which had a content of fine particles (37% of fine powder of 300 μm or less) greater than that employed in the present method (not more than 10% of fine powder of 300 μm or less). In addition, the apparent specific gravity of the inorganic fine powder (0.13 g/cm$^3$) was less than that used in the present method (from 0.2 to 0.5 g/cm$^3$). The resultant film had a good appearance and scratch resistance but increased haze and blocking resistance.

Comparative Examples 2 to 7

The same procedure as described in Example 1 was repeated in Comparative Examples 2 to 7, except that PP-1 was used as the polyolefin particles. In addition, the types and mixing amounts (parts by weight) of the inorganic fine powder were used as shown in Table 2. The properties of the films thus obtained are given in Table 4.

In summary, when any item among the average particle diameter of the polyolefin particles (I), the apparent specific gravity of the inorganic fine powder (II) and the mixing amount of the inorganic fine powder (II) is outside the ranges of those of the present invention, the appearance or properties of the film worsens.

Table 2

| Comparative Example No. | inorganic fine powder | mixing amount |
|---|---|---|
| 2 | - | 0 |
| 3 | SYLTON AMT (aluminium silicate powder manufactured by Mizusawa Chemical Co.) | 0.15 |
| 4 | Syloid 161 (silica powder manufacured by Fuji Devison Co.) | 0.20 |
| 5 | Syloid 244 (silica powder manufacured by Fuji Devison Co.) | 0.20 |
| 6 | SYLTON AMT 20 (aluminium silicate powder manufactured by Mizusawa Chemical Co.) | 0.15 |
| 7 | Syloid 55 (silica powder manufacured by Fuji Devison Co.) | 1.0 |

Table 3

| Examples and Comparative Examples | Polyolefin particles (I) | | Inorganic fine powder (II) | | | Film property | | | |
|---|---|---|---|---|---|---|---|---|---|
| | Average particle diameter $\mu$m | Content of fine powder (300 $\mu$m or less) weight % | Average particle diameter $\mu$m | Apparent specific gravity g/cm$^3$ | Mixing amount parts by weight | Appearence | Haze % | Blocking resistance g/100cm$^2$ | Scratch resistance ($\Delta$ Haze) % |
| Example 1 | 620 | 3 | 2.7 | 0.33 | 0.15 | good | 2.0 | 11 | 2.3 |
| Example 2 | 700 | 2 | 2.7 | 0.33 | 0.10 | good | 1.0 | 45 | 2.2 |
| Example 3 | 1170 | 6 | 2.7 | 0.33 | 0.15 | good | 1.6 | 33 | 1.6 |
| Comparative Example 1 | 1510 | 3 | 2.7 | 0.33 | 0.15 | bad | 2.1 | 50 | 2.0 |
| Reference Example 1 | 320 | 37 | 1.8 | 0.13 | 0.15 | good | 3.0 | 63 | 0.5 |

EP 0 704 483 B1

## Table 4

| Examples and Comparative Examples | Polyolefin particles (I) | | Inorganic fine powder (II) | | | Film property | | | |
|---|---|---|---|---|---|---|---|---|---|
| | Average particle diameter μm | Content of fine powder (300 μm or less) weight % | Average particle diameter μm | Apparent specific gravity g/cm³ | Mixing amount parts by weight | Appearence | Haze % | Blocking resistance g/100cm² | Scratch resistance (Δ Haze) % |
| Example 4 | 700 | 2 | 1.9 | 0.33 | 0.15 | good | 1.1 | 49 | 1.5 |
| Example 5 | 700 | 2 | 3.5 | 0.33 | 0.15 | good | 1.8 | 14 | 0.8 |
| Example 6 | 700 | 2 | 2.7 | 0.33 | 0.25 | good | 2.6 | 25 | 1.5 |
| Example 7 | 700 | 2 | 2.7 | 0.33 | 0.50 | nearly good | 3.5 | 11 | 1.8 |
| Comparative Example 2 | 700 | 2 | | | 0 | good | 0.3 | 77 | 0 |
| Comparative Example 3 | 700 | 2 | 0.8 | 0.40 | 0.15 | good | 0.7 | 65 | 0.6 |
| Comparative Example 4 | 700 | 2 | 4.5 | 0.29 | 0.20 | bad | 2.3 | 21 | 0.1 |
| Comparative Example 5 | 700 | 2 | 1.8 | 0.13 | 0.20 | bad | 3.0 | 17 | 0.3 |
| Comparative Example 6 | 700 | 2 | 2.0 | 0.61 | 0.15 | good | 1.1 | 37 | 15 |
| Comparative Example 7 | 700 | 2 | 2.7 | 0.33 | 1.0 | bad | 8.6 | 0 | 2.2 |

**Claims**

1. A method for producing a polyolefin composition, comprising the steps of:

   a) mixing

      i) 100 parts by weight of polyolefin particles (I) having an average particle diameter of from 500 to 1300 μm and containing not more than 10% by weight of fine particles having a particle diameter of 300 μm or less and

      ii) from 0.05 to 0.6 parts by weight of inorganic fine powder (II) having an average particle diameter of from 1 to 4 μm and an apparent specific gravity of from 0.2 to 0.5 g/cm$^3$ (all particle diameters being as measured by a laser diffraction technique, and apparent specific gravity as measured by the method of JIS K6220/6.8); and

   b) melt-kneading the mixture.

2. The method of Claim 1, wherein the polyolefin particles (I) are polypropylene.

3. The method of Claim 1 or Claim 2, wherein the inorganic fine powder (II) is silica.

4. The method of Claim 3, wherein the inorganic fine powder (II) has an average particle diameter of from 1.5 to 4 μm and an apparent specific gravity of from 0.2 to 0.4 g/cm$^3$.

5. The method of Claim 4, wherein the amount of the inorganic fine powder (II) is from 0.1 to 0.3 parts by weight.

6. A method for producing a polyolefin film comprising the steps of:

   a) mixing

      i) 100 parts by weight of polyolefin particles (I) having an average particle diameter of from 500 to 1300 μm and containing not more than 10% by weight of fine particles having a particle diameter of 300 μm or less and

      ii) 0.05 to 0.6 parts by weight of inorganic fine powder (II) having an average particle diameter of 1 to 4 μm and an apparent specific gravity of from 0.2 to 0.5 g/cm$^3$ (all particle diameters being as measured by a laser diffraction technique, and apparent specific gravity as measured by the method of JIS K6220/6.8);

   b) melt-kneading the mixture to produce a polyolefin composition; and
   c) melt-extruding the polyolefin composition to form the polyolefin film.

7. The method of Claim 6, wherein the polyolefin particles (I) are polypropylene.

8. The method of Claim 6 or Claim 7, wherein the inorganic fine powder (II) is silica.

9. The method of Claim 8, wherein the inorganic fine powder (II) has an average particle diameter of from 1.5 to 4 μm and an apparent specific gravity of from 0.2 to 0.4 g/cm$^3$.

10. The method of Claim 9, wherein the amount of the inorganic fine powder (II) is from 0.1 to 0.3 parts by weight.

**Patentansprüche**

1. Verfahren zur Herstellung einer Polyolefinzusammensetzung, umfassend die Schritte:

   a) Mischen von

      i) 100 Gewichtsteilen Polyolefinteilchen (I), die einen mittleren Teilchendurchmesser von 500 bis 1300 μm besitzen und höchstens 10 Gew.-% an feinen Teilchen mit einem Teilchendurchmesser von 300 μm oder weniger enthalten, und

ii) 0,05 bis 0,6 Gewichtsteilen eines anorganischen feinen Pulvers (II) mit einem mittleren Teilchendurchmesser von 1 bis 4 μm und einer Schüttdichte von 0,2 bis 0,5 g/cm$^3$ (wobei alle Teilchendurchmesser durch ein Laserbeugungsverfahren gemessen werden, und die Schüttdichte durch das Verfahren aus JIS K6220/6.8 gemessen wird); und

b) Schmelzkneten des Gemischs.

2. Verfahren nach Anspruch 1, wobei die Polyolefinteilchen (I) Polypropylen sind.

3. Verfahren nach Anspruch 1 oder 2, wobei das anorganische feine Pulver (II) Siliciumdioxid ist.

4. Verfahren nach Anspruch 3, wobei das anorganische feine Pulver (II) einen mittleren Teilchendurchmesser von 1,5 bis 4 μm und eine Schüttdichte von 0,2 bis 0,4 g/cm$^3$ besitzt.

5. Verfahren nach Anspruch 4, wobei die Menge des anorganischen feinen Pulvers (II) 0,1 bis 0,3 Gewichtsteile beträgt.

6. Verfahren zur Herstellung eines Polyolefinfilms, umfassend die Schritte:

a) Mischen von

i) 100 Gewichtsteilen Polyolefinteilchen (I), die einen mittleren Teilchendurchmesser von 500 bis 1300 μm besitzen und höchstens 10 Gew.-% an feinen Teilchen mit einem Teilchendurchmesser von 300 μm oder weniger enthalten, und

ii) 0,05 bis 0,6 Gewichtsteilen eines anorganischen feinen Pulvers (II) mit einem mittleren Teilchendurchmesser von 1 bis 4 μm und einer Schüttdichte von 0,2 bis 0,5 g/cm$^3$ (wobei alle Teilchendurchmesser durch ein Laserbeugungsverfahren gemessen werden, und die Schüttdichte durch das Verfahren aus JIS K6220/6.8 gemessen wird);

b) Schmelzkneten des Gemischs, wodurch eine Polyolefinzusammensetzung erzeugt wird; und

c) Schmelzextrudieren der Polyolefinzusammensetzung, wodurch der Polyolefinfilm erzeugt wird.

7. Verfahren nach Anspruch 6, wobei die Polyolefinteilchen (I) Polypropylen sind.

8. Verfahren nach Anspruch 6 oder 7, wobei das anorganische feine Pulver (II) Siliciumdioxid ist.

9. Verfahren nach Anspruch 8, wobei das anorganische feine Pulver (II) einen mittleren Teilchendurchmesser von 1,5 bis 4 μm und eine Schüttdichte von 0,2 bis 0,4 g/cm$^3$ besitzt.

10. Verfahren nach Anspruch 9, wobei die Menge des anorganischen feinen Pulvers (II) 0,1 bis 0,3 Gewichtsteile beträgt.


**Revendications**

1. Procédé pour la production d'une composition de polyoléfine, comprenant les étapes :

a) de mélange

i) de 100 parties en poids de particules de polyoléfine (I) présentant un diamètre moyen de particules de 500 à 1 300 μm et contenant au plus 10% en poids de fines particules présentant un diamètre de particules de 300 μm ou inférieur et

ii) de 0,05 à 0,6 parties en poids de fine poudre inorganique (II) présentant un diamètre moyen de particules de 1 à 4 μm et une masse volumique apparente de 0,2 à 0,5 g/cm$^3$ (tous les diamètres de particules étant mesurés par une technique de diffraction au laser et la masse volumique apparente étant mesurée par le procédé de JIS K6220/6.8); et

b) de malaxage à l'état fondu du mélange.

2. Procédé selon la revendication 1, dans lequel les particules de polyoléfine (I) sont du polypropylène.

3. Procédé selon la revendication 1 ou la revendication 2, dans lequel la fine poudre inorganique (II) est de la silice.

4. Procédé selon la revendication 3, dans lequel la fine poudre inorganique (II) présente un diamètre moyen de particules de 1,5 à 4 $\mu$m et une masse volumique apparente de 0,2 à 0,4 g/cm$^3$.

5. Procédé selon la revendication 4, dans lequel la quantité de la fine poudre inorganique (II) est de 0,1 à 0,3 parties en poids.

6. Procédé pour la production d'un film de polyoléfine comprenant les étapes :

   a) de mélange

      i) de 100 parties en poids de particules de polyoléfine (I) présentant un diamètre moyen de particules de 500 à 1 300 $\mu$m et contenant au plus 10% en poids de fines particules présentant un diamètre de particules de 300 $\mu$m ou inférieur et
      ii) de 0,05 à 0,6 parties en poids de fine poudre inorganique (II) présentant un diamètre moyen de particules de 1 à 4 $\mu$m et une masse volumique apparente de 0,2 à 0,5 g/cm$^3$ (tous les diamètres de particules étant mesurés par une technique de diffraction au laser et la masse volumique apparente étant mesurée par le procédé de JIS K6220/6.8);

      b) de malaxage à l'état fondu du mélange pour produire une composition de polyoléfine; et
      c) d'extrusion à l'état fondu de la composition de polyoléfine pour former le film de polyoléfine.

7. Procédé selon la revendication 6, dans lequel les particules de polyoléfine (I) sont du polypropylène.

8. Procédé selon la revendication 6 ou la revendication 7, dans lequel la fine poudre inorganique (II) est de la silice.

9. Procédé selon la revendication 8, dans lequel la fine poudre inorganique (II) présente un diamètre moyen de particules de 1,5 à 4 $\mu$m et une masse volumique apparente de 0,2 à 0,4 g/cm$^3$.

10. Procédé selon la revendication 9, dans lequel la quantité de la fine poudre inorganique (II) est de 0,1 à 0,3 parties en poids.